# EUROPEAN PATENT APPLICATION

(11) **EP 2 814 016 A1**
(43) Date of publication of application: **17.12.2014**
(21) Application number: 12867920.6
(22) Date of filing: 06.02.2012
(51) Int. Cl.: G08G 1/16, B60R 1/00, B60R 21/00

(54) **OBJECT DETECTION DEVICE**

(71) Applicant: Toyota Jidosha Kabushiki Kaisha, Toyota-shi, Aichi 471-8571 (JP)
(72) Inventor: SOBUE Yuka, Toyota-shi Aichi 471-8571 (JP); OKAMURA Ryuji, Toyota-shi Aichi 471-8571 (JP); YOSHIOKA Chika, Toyota-shi Aichi 471-8571 (JP)
(74) Representative: Smith, Samuel Leonard
(86) International application number: PCT/JP2012/052641
(87) International publication number: WO 2013/118247

(57) **Abstract**

An object detection device is equipped with an object detection unit 12 that detects a moving object in a periphery of a vehicle 1, and a threshold change unit 13 that changes, based on mobility information on the vehicle, a detection threshold T in detecting the moving object. Thus, by changing the detection threshold T such that the moving object becomes difficult to detect during a movement of the host vehicle 1, especially during a turn thereof, the occurrence of an erroneous detection can be suppressed even in a situation where an erroneous detection is likely to occur. It is preferable that the detection threshold T be changed such that the moving object becomes difficult to detect as a speed V increases or as a steering angle S increases. The detection threshold T may be changed in stages or continuously based on the mobility information on the vehicle.

## Description

### TECHNICAL FIELD

The invention relates to an object detection device.

### BACKGROUND ART

Conventionally, as disclosed in, for example, Japanese Patent Application Publication No. 2008-174076 (JP-2008-174076 A), there is known a vehicle periphery monitoring apparatus that detects a moving object in a periphery of a host vehicle and gives a notification of a result of the detection.

In such an apparatus, there are demands to monitor the periphery during a backward movement of the host vehicle (an exit from or an entrance into a shed, parking, or handling) or during a forward movement (an exit from or an entrance into the shed, parking, or handling) of the host vehicle in a situation with poor visibility. Then, in such a situation, it is necessary to detect and give a notification of a moving object in the distance during a stop, and detect and give a notification of a moving object in the periphery during a movement.

### Related Art Document

### Patent Document

Patent Document 1: Japanese Patent Application Publication No. 2008-174076 (JP-2008-174076 A)

### SUMMARY OF THE INVENTION

### Problem to Be Solved by the Invention

However, during the movement, an object in the distance or a stationary object in the periphery is likely to be erroneously detected as the moving object in the periphery, as a result of the movement of the host vehicle, especially a turn thereof. Besides, an erroneous notification resulting from this erroneous detection may make a driver feel bothered.

Thus, the invention aims at providing an object detection device capable of suppressing the occurrence of an erroneous detection of a moving object during a movement. Besides, the invention aims at providing an object detection device capable of suppressing the occurrence of an erroneous notification resulting from this erroneous detection.

### Means for Solving the Problem

An object detection device according to the invention is equipped with an object detection unit that detects a moving object in a periphery of a vehicle, and a threshold change unit that changes, based on mobility information on the vehicle, a detection threshold in detecting the moving object.

In accordance with the object detection device according to the invention, the detection threshold in detecting the moving object is changed based on mobility information on the vehicle. Thus, by changing the detection threshold such that the moving object becomes difficult to detect during the movement of the host vehicle, especially during a turn thereof, the occurrence of an erroneous detection can be suppressed even in a situation where an erroneous detection is likely to occur. It should be noted herein that the threshold change unit may change the detection threshold in stages based on a comparison between mobility information and a reference value on mobility information. Besides, the object detection unit may detect the moving object based on a peripheral image that is input from an image pickup device that picks up a peripheral image of the vehicle.

Besides, the threshold change unit may change the detection threshold such that the moving object becomes difficult to detect as a speed increases. Thus, the occurrence of an erroneous detection can be suppressed during the movement of the host vehicle.

Besides, the threshold change unit may change the detection threshold such that the moving object becomes difficult to detect as a steering angle increases. Thus, the occurrence of an erroneous detection can be suppressed during a turn of the host vehicle.

Besides, the threshold change unit may change the detection threshold such that the moving object becomes difficult to detect as an angular velocity of the steering angle increases. Thus, the occurrence of an erroneous detection can be suppressed during a high-speed turn of the host vehicle.

Besides, the threshold change unit may change the detection threshold such that the moving object becomes easy to detect only when a setting condition on the speed or the steering angle is fulfilled. Thus, the occurrence of an unnecessary change in the detection threshold can be suppressed.

Besides, the threshold change unit may directly change the detection threshold from a first value to a second value when a condition for changing the detection threshold in stages from the first value to the second value is fulfilled. Thus, the occurrence of an absence of detection in changing the detection threshold can be suppressed.

Besides, the threshold change unit may not change the detection threshold until the vehicle is completely stopped, when a condition for changing the detection threshold to a threshold at which the moving object is easiest to detect is fulfilled. Thus, the occurrence of an erroneous detection by knocking resulting from the braking before a stop can be suppressed.

Besides, the object detection device can further be equipped with a detection notification unit that gives a notification of a detection result of the moving object, and a notification control unit that stops the notification of the detection result when the speed is higher than a notification reference value. Thus, the occurrence of an erroneous notification resulting from an erroneous detection during the movement of the host vehicle can be suppressed.

Besides, the notification control unit may not resume the notification of the detection result until the vehicle has been completely stopped for a set time, once the notification of the detection result is stopped. Thus, the occurrence of an unnecessary notification can be suppressed.

Besides, the detection notification unit may further give a notification of an execution state of the notification of the detection result. Thus, a driver can confirm the execution state of the notification and avoid an erroneous operation.

### Effect of the Invention

The invention makes it possible to provide an object detection device capable of suppressing the occurrence of an erroneous detection of a moving object during a movement. Besides, the invention makes it possible to provide an object detection device capable of suppressing the occurrence of an erroneous notification resulting from this erroneous detection.

### BRIEF DESCRIPTION OF THE DRAWINGS

[FIG. 1] FIG. 1 is a block diagram showing the configuration of a vehicle periphery monitoring apparatus that includes an object detection device according to a first embodiment of the invention.
[FIG. 2] FIG. 2 is a view for explaining a detection threshold that is used to detect a moving object.
[FIG. 3] FIG. 3 is a flowchart showing the operation of the vehicle periphery monitoring apparatus according to the first embodiment of the invention.
[FIG. 4] FIG. 4 is a flowchart showing a process of changing the detection threshold during a stop.
[FIG. 5] FIG. 5 is a flowchart showing a process of changing the detection threshold during a straight movement.
[FIG. 6] FIG. 6 is a flowchart showing a process of changing the detection threshold during a small turn.
[FIG. 7] FIG. 7 is a flowchart showing a process of changing the detection threshold during a large turn.
[FIG. 8] FIG. 8 is a view showing a situation of changing the detection threshold during a backward exit from a shed.
[FIG. 9] FIG. 9 is a view showing a situation of changing the detection threshold during a backward entrance into the shed.
[FIG. 10] FIG. 10 is a block diagram showing the configuration of a vehicle periphery monitoring apparatus that includes an object detection device according to a second embodiment of the invention.
[FIG. 11] FIG. 11 is a flowchart showing the operation of the vehicle periphery monitoring apparatus according to the second embodiment of the invention.
[FIG. 12] FIG. 12 is a flowchart showing a process of changing an execution state of a notification of a detection result.
[FIG. 13] FIG. 13 is a view showing a situation of changing the execution state during a backward exit from a shed.
[FIG. 14] FIG. 14 is a view showing a situation of changing the execution state during a backward entrance into the shed.

### MODES FOR CARRYING OUT THE INVENTION

The embodiments of the invention will be described hereinafter in detail, with reference to the accompanying drawings. Incidentally, like elements are denoted by like reference symbols respectively in the description of the drawings, and any redundant description will be omitted.

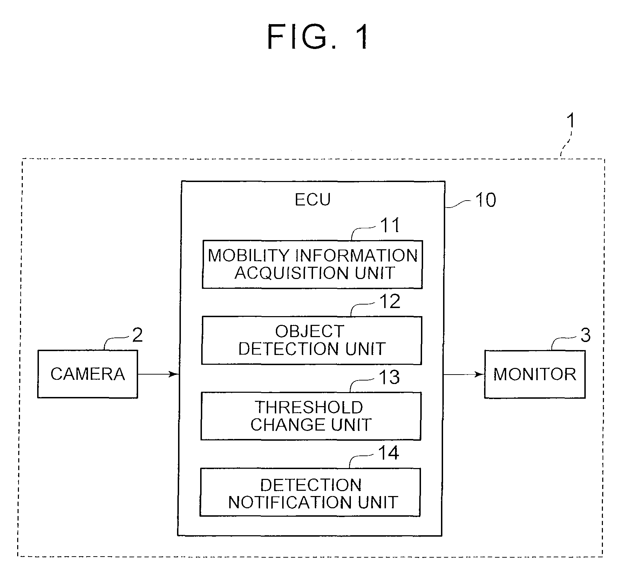

First of all, a vehicle periphery monitoring apparatus that includes an object detection device according to the first embodiment of the invention will be described with reference to FIGS. 1 to 9. The object detection device according to the first embodiment of the invention is a device capable of suppressing the occurrence of an erroneous detection of a moving object during a movement of a host vehicle, by changing a detection threshold in detecting the moving object based on mobility information on the vehicle.

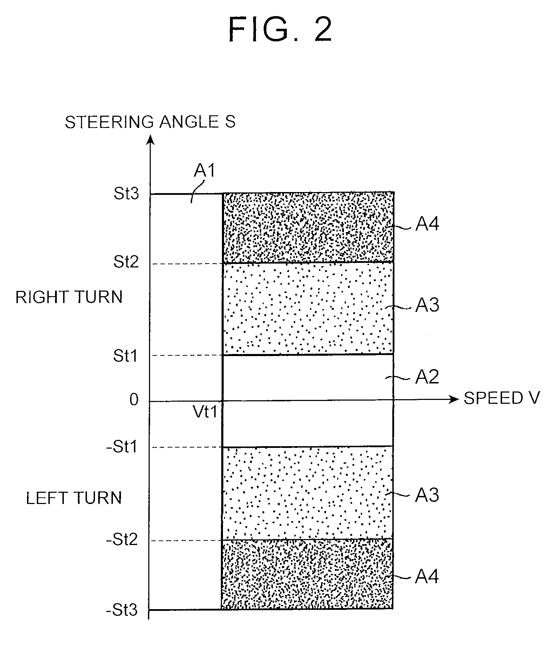

First of all, the configuration of the vehicle periphery monitoring apparatus according to the first embodiment of the invention will be described with reference to FIGS. 1 and 2. FIG. 1 is a block diagram showing the configuration of the vehicle periphery monitoring apparatus that includes the object detection device according to the first embodiment of the invention. As shown in FIG. 1, the vehicle periphery monitoring apparatus according to the first embodiment of the invention has a camera 2, an electronic control unit (an ECU) 10, and a monitor 3.

The camera 2 constitutes an image pickup device that picks up a peripheral image of the vehicle 1. The camera 2 is an in-vehicle camera such as a front camera that picks up a front image, a rear camera that picks up a rear image, a side camera that picks up a side image, or the like.

The ECU 10 is an in-vehicle controller that has a CPU, a ROM, a RAM and the like. The ECU 10 has a mobility information acquisition unit 11, an object detection unit 12, a threshold change unit 13, and a detection notification unit 14. These component elements 11 to 14 constitute the object detection device according to the first embodiment of the invention. The component elements 11 to 14 are realized by a piece of software that is executed by the ECU 10. Incidentally, the component elements 11 to 14 may be arranged in a dispersed manner in a plurality of ECU's or the like.

The mobility information acquisition unit 11 acquires pieces of mobility information on the vehicle 1 such as a speed V, an acceleration, a steering angle S, a steering angle angular velocity W, a shift position, a direction indicator position, the presence/absence of a brake operation, a brake operation amount and the like. The pieces of mobility information are acquired from wheel speed sensors, a steering angle sensor, a shift position sensor, a direction indicator position sensor, a brake pedal operation sensor and the like.

The object detection unit 12 detects a moving object in the periphery of the vehicle 1. A peripheral image corresponding to the moving direction of the vehicle 1 is input to the object detection unit 12. That is, a front image is input to the object detection unit 12 when the vehicle 1 moves forward, a rear image is input to the object detection unit 12 when the vehicle 1 moves backward, and a right or left side image is input to the object detection unit 12 when the vehicle 1 makes a right or left turn. The moving direction of the vehicle 1 is determined based on the pieces of mobility information such as the steering angle S, the shift position, the direction indicator position and the like or traveling route guidance information input from a navigation device (not shown).

The moving object is detected based on, for example, the peripheral image picked up by the camera 2. In this case, the moving object is detected by, for example, subjecting the peripheral image to a pattern matching process. The moving object is detected in accordance with a variable detection threshold T or a detection sensitivity. The moving object becomes easy to detect, for example, as the detection threshold T decreases or as the detection sensitivity increases.

The threshold change unit 13 changes, based on the pieces of mobility information on the vehicle 1, the detection threshold T in detecting the moving object. The detection threshold T is changed based on, for example, the speed V and the steering angle S that are acquired by the mobility information acquisition unit 11 (see FIG. 2).

It should be noted herein that the threshold change unit 13 changes the detection threshold V such that the moving object becomes difficult to detect as the speed V increases or as the steering angle S increases. For example, the detection threshold T is changed such that the moving object becomes more difficult to detect if the speed V is higher than a speed reference value Vt than if the speed V is lower than this reference value Vt. By the same token, the detection threshold T is changed such that the moving object becomes more difficult to detect if the steering angle S is larger than a steering angle reference value St than if the steering angle S is smaller than this reference value St. That is, in the present embodiment of the invention, the detection threshold T is changed in stages based on a comparison between the mobility information on the vehicle 1 and the reference value of the mobility information. However, the detection threshold T may be continuously changed based on a predetermined relationship between the mobility information on the vehicle 1 and the detection threshold T, without recourse to a comparison with the reference value.

FIG. 2 is a view showing an example of the detection threshold T that is used to detect the moving object. In the example shown in FIG. 2, the detection threshold T is classified into first to fourth thresholds T1 to T4, for example, in the ascending order of the detection threshold T or in the descending order of the detection sensitivity.

As indicated by a region A1 in FIG. 2, the first threshold T1 is the threshold T that is applied if the speed V is lower than a speed reference value Vt1, namely, when the moving object is detected almost during a stop of the host vehicle 1. Incidentally, the speed reference value Vt1 is set to about 0 km/h. Since an erroneous detection does not result from a movement or a turn of the vehicle when the vehicle is stopped, the first threshold T1 is set highest in detection sensitivity among the other thresholds T. That is, the threshold T is set such that the moving object becomes easier to detect in the region A than in other regions A2 to A4. Besides, the first threshold T1 is set independently of the steering angle S, such that the approaching vehicle 1 in the distance can be detected even if the steering angle S is increased during a stop.

As indicated by the region A2 in FIG. 2, the second threshold T2 is the threshold T that is applied if the speed V is higher than the speed reference value Vt1 and (the absolute value of) the steering angle S is smaller than a first steering angle reference value St1, namely, when the moving object is detected during a straight movement of the host vehicle 1. Incidentally, the first steering angle reference value St1 is set to, for example, a value of about 0° for each of a right turning direction and a left turning direction. Although an erroneous detection does not result from a turn during the straight movement, the movement may cause an erroneous detection. Therefore, the second threshold T2 is set lower in detection sensitivity than the first threshold T1. That is, the threshold T is set such that the moving object becomes more difficult to detect in the region A2 than in the region A1.

As indicated by the region A3 in FIG. 2, the third threshold T3 is the threshold T that is applied if the speed V is equal to or higher than the speed reference value Vt1 and (the absolute value of) the steering angle S is equal to or larger than the first steering angle reference value St1 and smaller than a second steering angle reference value St2, namely, when the moving object is detected during a small turn of the host vehicle 1. Incidentally, the second steering angle reference value St2 is set to, for example, an arbitrary value that is equal to or larger than about 0° and smaller than about 45° for each of the right and left turning directions. Since an erroneous detection may result from a turn if the turn is gentle, the third threshold T3 is set lower in detection sensitivity than the second threshold T2. That is, the threshold T is set such that the moving object becomes more difficult to detect in the region A3 than in the region A2.

As indicated by the region A4 in FIG. 2, the fourth threshold T4 is the threshold T that is applied if the speed V is equal to or higher than the speed reference value Vt1 and (the absolute value of) the steering angle S is equal to or larger than the second steering angle reference value St2 and smaller than a third steering angle reference value St3, namely, when the moving object is detected during a large turn of the host vehicle 1. Incidentally, the third steering angle reference value St3 is set to an arbitrary value that is, for example, equal to or larger than about 45° and smaller than about 90° for each of the right and left turning directions. Since an erroneous detection is very likely to result from a turn when the turn is sharp, the fourth threshold T4 is set lower in detection sensitivity than the third threshold T3. That is, the threshold T is set such that the moving object becomes more difficult to detect in the region A4 than in the region A3.

The threshold change unit 13 may change the detection threshold T according to a method that differs depending on whether the detection threshold T should be increased or reduced from the threshold T at the present time. Incidentally, the detection threshold T at the present time is stored into a memory or the like by the threshold change unit 13.

It should be noted herein that the detection threshold T is basically changed based on the speed V and the operation angle S of the vehicle 1 if the detection threshold T is increased from the threshold T at the present time, namely, if the detection sensitivity is lowered. For example, the detection threshold T is changed from the first threshold T1 to the second threshold T2 if the state of the vehicle 1 makes a transition from a stop to a straight movement in the example shown in FIG. 2.

It should be noted, however, that the detection threshold T is exceptionally changed such that the moving object becomes difficult to detect, if the angular velocity W of the steering angle S is larger than an angular velocity reference value Wt. The detection threshold T is changed such that the moving object becomes difficult to detect as the angular velocity W of the steering angle S increases. Incidentally, the angular velocity reference value Wt (Wt1 and Wt2 as will be described later) is set in stages as an arbitrary value that is, for example, equal to or larger than 10°/s, especially equal to or larger than 30°/s. For example, in the example shown in FIG. 2, the detection threshold T is changed from the first threshold T1 to the fourth threshold T4 instead of being changed from the first threshold T1 to the third threshold T3, if the state of the vehicle 1 rapidly makes a transition from a stop to a small turn.

On the other hand, in the case where the detection threshold T is reduced from the threshold T at the present time (in the case where the detection sensitivity is raised) or in the case where the turning direction of the vehicle 1 is reversed, the detection threshold T is changed only if a setting condition on the speed V or the steering angle S is fulfilled, as will be indicated below.

For example, if the state of the vehicle 1 makes a transition from a small turn to another small turn on the reverse side, the setting condition requires that the steering angle S be smaller than a reference value that is smaller than the second steering angle reference value St2. As an example, a case where the second steering angle reference value St2 is set to 45° is assumed. In this case, if the steering angle S changes from S = 0° to 0° < S < 45°, it is determined that the state of the vehicle 1 has made a transition from a straight movement to a small turn. Furthermore, if the steering angle S changes from 0° < S < 45° to 0° < S < 30° (on the reverse side), it is determined that the state of the vehicle 1 has made a transition from a small turn to another small turn on the reverse side. That is, in this case, the setting condition requires that the steering angle S be smaller than a reference value that is smaller than the second steering angle reference value St2. Incidentally, in another example, if the second steering angle reference value St2 is set to 90°, the setting condition for making a determination on a transition to another small turn on the reverse side may be set to 45° (on the reverse side). It should be noted herein that a turn on the reverse side means a turn from a right turn to a left turn or a turn in the opposite direction with respect to a state where a steering wheel is set straight. In this case, the detection threshold T is changed from the third threshold T3 to the third threshold T3 on the reverse side, as soon as the setting condition is fulfilled.

Besides, if the state of the vehicle 1 makes a transition from a large turn to a small turn on the reverse side as well, the setting condition requires that the steering angle S be smaller than a reference value that is smaller than the third steering angle reference value St3. In this case, the detection threshold T is changed from the fourth threshold T4 to the third threshold T3 on the reverse side, as soon as the setting condition is fulfilled.

Besides, if the state of the vehicle 1 makes a transition from a large turn to another large turn on the reverse side, the setting condition requires that the steering angle angular velocity W be equal to or larger than the angular velocity reference value Wt. In this case, the detection threshold T is changed from the fourth threshold T4 to the fourth threshold T4 on the reverse side, as soon as the setting condition is fulfilled.

Besides, if the state of the vehicle 1 makes a transition from a large turn, a turn or a straight movement to a stop, the setting condition requires that the speed V have been 0 km/h, namely, the vehicle 1 have been completely stopped for a predetermined time. In this case, the detection threshold T is changed from the fourth threshold T4, the third threshold T3 or the second threshold T2 to the first threshold T1 as soon as the setting condition is fulfilled.

The detection notification unit 14 notifies a driver or the like of a detection result of the moving object. In the present embodiment of the invention, the detection result is displayed by the monitor 3 or the like that is designed for a navigation device or mounted on an instrumental panel. The detection result is displayed together with a peripheral image of the vehicle 1, for example, with the display region of the moving object emphasized etc. Incidentally, the driver may also be notified of the detection result through other notification means such as a speaker (not shown) or the like.

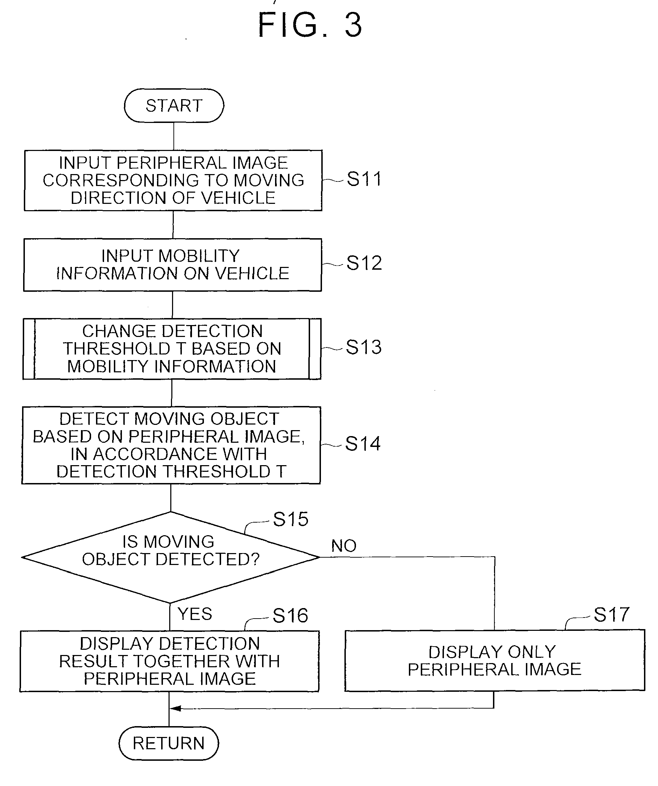

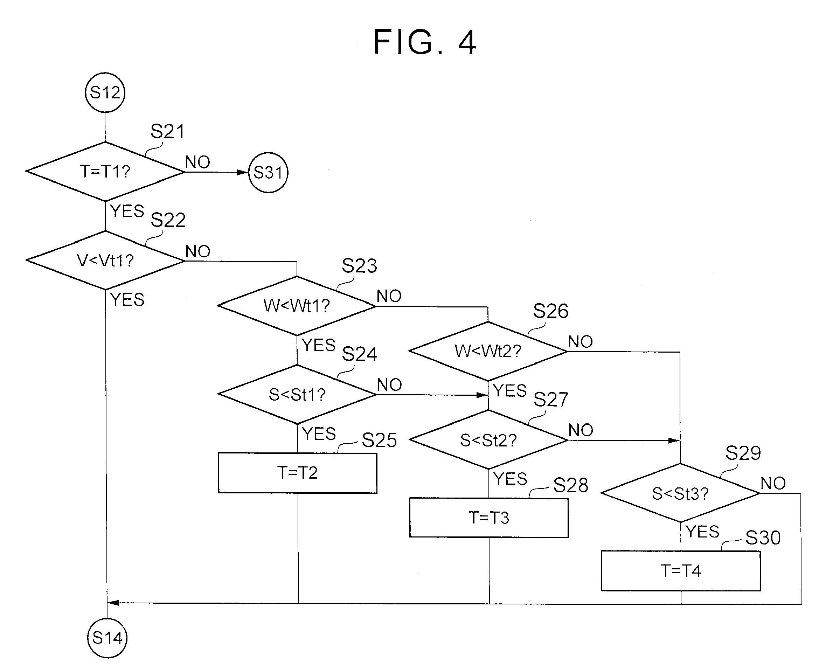

Next, the operation of the vehicle periphery monitoring apparatus according to the first embodiment of the invention will be described with reference to FIGS. 3 to 9. FIG. 3 is a flowchart showing the operation of the vehicle periphery monitoring apparatus according to the first embodiment of the invention. The vehicle periphery monitoring apparatus repeatedly performs a process shown in FIG. 3 (including processes shown in FIGS. 4 to 7) on a predetermined cycle.

As shown in FIG. 3, in the vehicle periphery monitoring apparatus, a peripheral image corresponding to the moving direction of the vehicle 1 is input to the object detection unit 12 (step S11). Pieces of mobility information such as the speed V, the steering angle S and the like of the vehicle 1 are input to the threshold change unit 13 (step S12). As will be described later with reference to FIGS. 4 to 7, the threshold change unit 13 changes, based on the pieces of mobility information, the detection threshold T in detecting the moving object (step S13). The object detection unit 12 detects the moving object based on the peripheral image, in accordance with the detection threshold T (step S14).

Subsequently, the object detection unit 12 determines whether or not the moving object is detected (step S15). If it is determined in step S15 that the moving object is detected, the detection notification unit 14 causes the monitor 3 to display the detection result together with the peripheral image (step S16). On the other hand, if it is not determined in step S15 that the moving object is detected, the detection notification unit 14 causes the monitor 3 to display only the peripheral image (step S17).

FIGS. 4 to 9 are views showing the details of the process of changing the detection threshold T (step S 13) in the case where the detection threshold T shown in FIG. 2 is used. The threshold change unit 13 makes a determination on the detection threshold T set at the present time, namely, the detection threshold T set or changed before, and changes the detection threshold T according to need, based on a result of the determination.

FIG. 4 is a flowchart showing the process of changing the detection threshold T during a stop. FIG. 4 shows a case where the threshold T at the present time is set to the first threshold T1, namely, the threshold T that is applied in detecting the moving object during a stop (Yes in step S21). In this case, the threshold change unit 13 determines whether or not the speed V is lower than the speed reference value Vt1, namely, whether or not the host vehicle 1 is stopped (step S22). If it is determined that the host vehicle 1 is stopped, there is no need to change the threshold T, so the process proceeds to step S14.

On the other hand, if it is not determined that the host vehicle 1 is stopped, the threshold change unit 13 determines whether or not the steering angle angular velocity W is smaller than the first angular velocity reference value Wt1 (step S23). If it is determined that the steering angle angular velocity W is smaller than the first angular velocity reference value Wt1, the threshold change unit 13 further determines whether or not the steering angle S is smaller than the first steering angle reference value St1 (step S24). Then, if it is determined that the steering angle angular velocity W is smaller than a first angular velocity reference value Wt1 and that the steering angle S is smaller than the first steering angle reference value St1, the threshold change unit 13 changes the threshold T to the second threshold T2, namely, the threshold T during a straight movement (step S25).

On the other hand, if it is not determined in step S23 that the steering angle angular velocity W is lower than the first angular velocity reference value Wt1, the threshold change unit 13 determines whether or not the steering angle angular velocity W is lower than a second angular velocity reference value Wt2 (step S26). If it is determined that the steering angle angular velocity W is lower than the second angular velocity reference value Wt2, or if it is not determined in step S24 that the steering angle S is smaller than the first steering angle reference value St1, the threshold change unit 13 determines whether or not the steering angle S is smaller than the second steering angle reference value St2 (step S27). Then, if it is determined that the steering angle S is smaller than the second steering angle reference value St2, the threshold change unit 13 changes the threshold T to the third threshold T3, namely, the threshold T during a small turn (step S28).

Besides, if it is not determined in step S26 that the steering angle angular velocity W is lower than the second angular velocity reference value Wt2, or if it is not determined in step S27 that the steering angle S is smaller than the second steering angle reference value St2, the threshold change unit 13 determines whether or not the steering angle S is smaller than the third steering angle reference value St3 (step S29). Then, if it is determined that the steering angle S is smaller than the third steering angle reference value St3, the threshold change unit 13 changes the threshold T to the fourth threshold T4, namely, the threshold T during a large turn (step S30). Incidentally, if it is not determined that the steering angle S is smaller than the third steering angle reference value St3, the threshold T remains unchanged, and the process proceeds to step S 14.

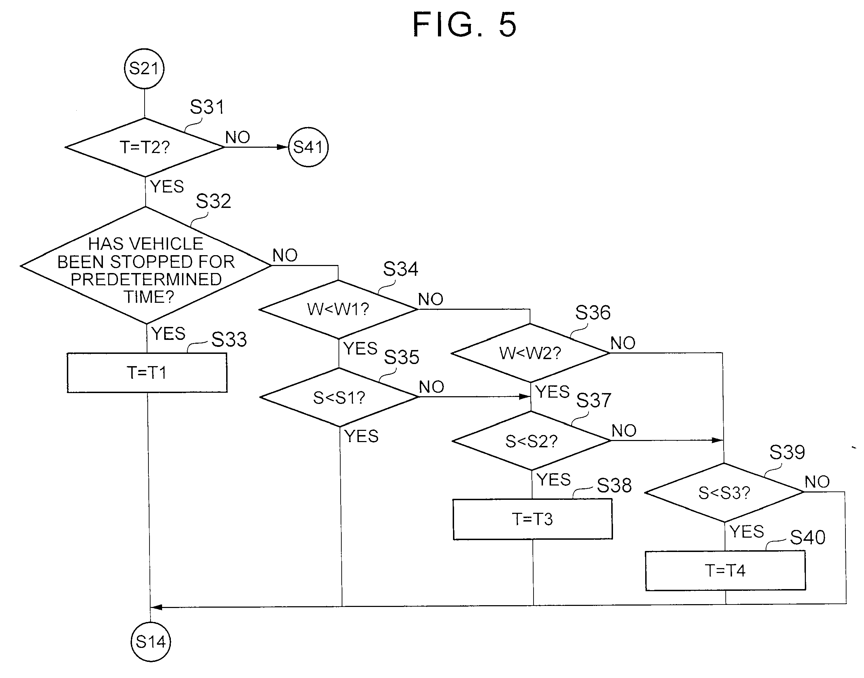

FIG. 5 is a flowchart showing the process of changing the detection threshold T during a straight movement. FIG. 5 shows a case where the threshold T at the present time is set to the second threshold T2, namely, the threshold T that is applied in detecting the moving object during a straight movement (Yes in step S31). In this case, the threshold change unit 13 determines whether or not the host vehicle 1 has been stopped for a predetermined time (step S32). If it is determined that the host vehicle 1 has been stopped for the predetermined time, the threshold change unit 13 changes the threshold T to the first threshold T1, namely, the threshold T during a stop (step S33). Then, the process proceeds to step S 14.

On the other hand, if it is not determined that the host vehicle 1 has been stopped for the predetermined time, the threshold change unit 13 determines whether or not the steering angle angular velocity W is lower than the first angular velocity reference value Wt1 (step S34). If it is determined that the steering angle angular velocity W is lower than the first angular velocity reference value Wt1, the threshold change unit 13 further determines whether or not the steering angle S is smaller than the first steering angle reference value St1 (step S35). Then, if it is determined in step S34 that the steering angle angular velocity W is lower than the first angular velocity reference value Wt1, and if it is determined in step S35 that the steering angle S is smaller than the first steering angle reference value St1, there is no need to change the threshold T, so the process proceeds to step S 14.

On the other hand, if it is not determined in step S34 that the steering angle angular velocity W is lower than the first angular velocity reference value Wt1, the threshold change unit 13 determines whether or not the steering angle angular velocity W is lower than the second angular velocity reference value Wt2 (step S36). If it is determined that the steering angle angular velocity W is lower than the second angular velocity reference value Wt2, or if it is not determined in step S35 that the steering angle S is smaller than the first steering angle reference value St1, the threshold change unit 13 determines whether or not the steering angle S is smaller than the second steering angle reference value St2 (step S37). Then, if it is determined that the steering angle S is smaller than the second steering angle reference value St2, the threshold change unit 13 changes the threshold T to the third threshold T3, namely, the threshold T during a small turn (step S38).

Besides, if it is not determined in step S36 that the steering angle angular velocity W is lower than the second angular velocity reference value Wt2, or if it is not determined in step S37 that the steering angle S is smaller than the second steering angle reference value St2, the threshold change unit 13 determines whether or not the steering angle S is smaller than the third steering angle reference value St3 (step S39). Then, if it is determined that the steering angle S is smaller than the third steering angle reference value St3, the threshold change unit 13 changes the threshold T to the fourth threshold T4, namely, the threshold T during a large turn (step S40). Incidentally, if it is not determined that the steering angle S is smaller than the third steering angle reference value St3, the threshold T remains unchanged, and the process proceeds to step S 14.

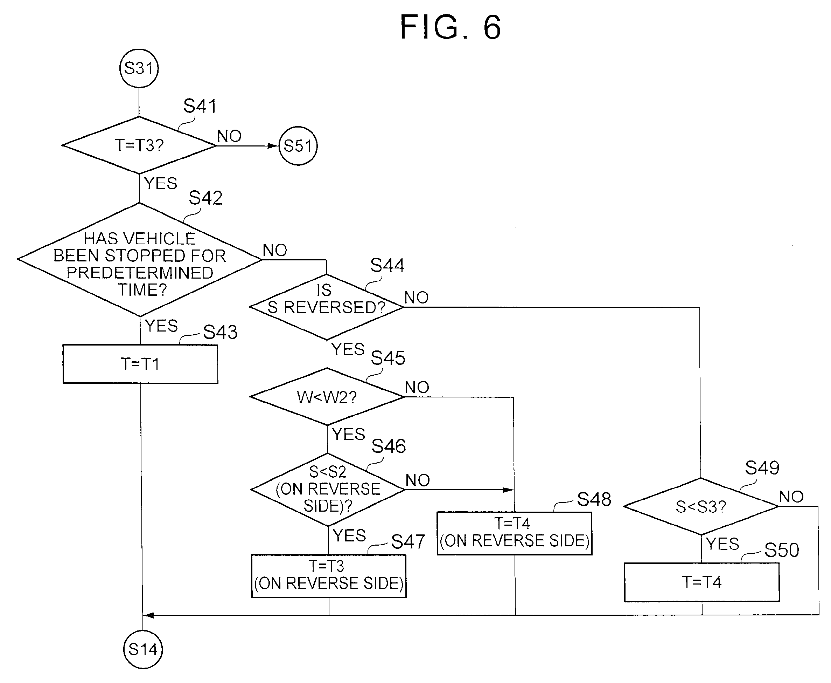

FIG. 6 is a flowchart showing the process of changing the detection threshold T during a small turn. FIG. 6 shows a case where the threshold T at the present time is set to the third threshold T3, namely, the threshold T that is applied in detecting the moving object during a small turn (Yes in step S41). In this case, the threshold change unit 13 determines whether or not the host vehicle 1 has been stopped for a predetermined time (step S42). If it is determined that the host vehicle 1 has been stopped for the predetermined time, the threshold change unit 13 changes the threshold T to the first threshold T1, namely, the threshold T during a stop (step S43). Then, the process proceeds to step S 14.

On the other hand, if it is not determined in step S42 that the host vehicle 1 has been stopped for the predetermined time, the threshold change unit 13 determines whether or not the steering angle S is reversed (step S44). If it is determined that the steering angle S is reversed, the threshold change unit 13 determines whether or not the steering angle angular velocity W is lower than the second angular velocity reference value Wt2 (step S45). If it is determined that the steering angle angular velocity W is lower than the second angular velocity reference value Wt2, the threshold change unit 13 determines whether or not the steering angle S is smaller than the second steering angle reference value St2 on the reverse side (step S46). Then, if it is determined in step S44 that the steering angle S is reversed, if it is determined in S45 that the steering angle angular velocity W is lower than the second angular velocity reference value Wt2, and if it is determined in step S46 that the steering angle S is smaller than the second steering angle reference value St2 on the reverse side, the threshold change unit 13 changes the threshold T to the third threshold T3 on the reverse side, namely, the threshold T during a small turn on the reverse side (step S47).

Besides, if it is not determined in step S45 that the steering angle angular velocity W is lower than the second angular velocity reference value Wt2, or if it is not determined in step S46 that the steering angle S is smaller than the second steering angle reference value St2 on the reverse side, the threshold change unit 13 changes the threshold T to the fourth threshold T4 on the reverse side, namely, the threshold T during a large turn on the reverse side (step S48).

Besides, if it is not determined in step S44 that the steering angle S is reversed, the threshold change unit 13 determines whether or not the steering angle S is smaller than the third steering angle reference value St3 (step S49). Then, if it is determined that the steering angle S is smaller than the third steering angle reference value St3, the threshold change unit 13 changes the threshold T to the fourth threshold T4, namely, the threshold T during a large turn (step S50). Incidentally, if it is not determined that the steering angle S is smaller than the third steering angle reference value St3, the threshold T remains unchanged, and the process proceeds to step S 14.

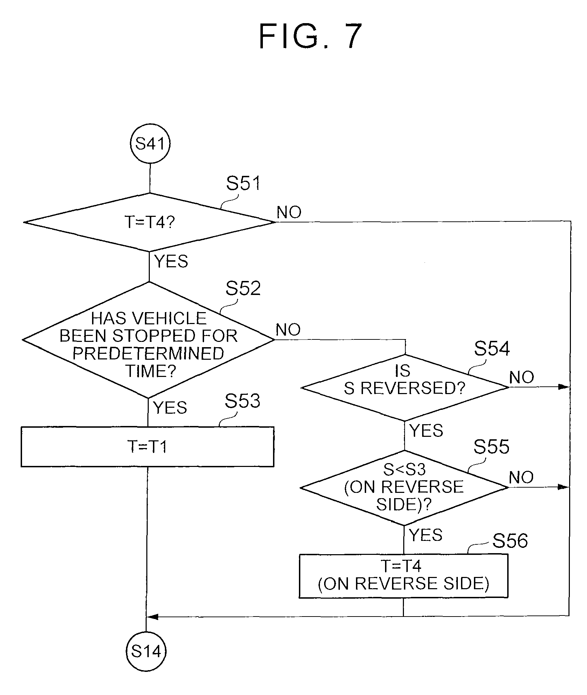

FIG. 7 is a flowchart showing the process of changing the detection threshold T during a large turn. FIG. 7 shows a case where the threshold T at the present time is set to the fourth threshold T4, namely, the threshold T that is applied in detecting the moving object during a large turn (Yes in step S51). In this case, the threshold change unit 13 determines whether or not the host vehicle 1 has been stopped for a predetermined time (step S52). If it is determined that the host vehicle 1 has been stopped for the predetermined time, the threshold change unit 13 changes the threshold T to the first threshold T1, namely, the threshold T during a stop (step S53). Then, the process proceeds to step S 14.

On the other hand, if it is not determined in step S52 that the host vehicle 1 has been stopped for the predetermined time, the threshold change unit 13 determines whether or not the steering angle S is reversed (step S54). If it is determined that the steering angle S is reversed, the threshold change unit 13 determines whether or not the steering angle S is smaller than the third steering angle reference value St3 on the reverse side (step S55). Then, if it is determined in step S54 that the steering angle S is reversed, and if it is determined in step S55 that the steering angle S is smaller than the third steering angle reference value St3 on the reverse side, the threshold change unit 13 changes the threshold T to the fourth threshold T4 on the reverse side, namely, the threshold T during a large turn on the reverse side (step S56).

Incidentally, if it is not determined in step S51 that the threshold T at the present time is set to the fourth threshold T4, if it is not determined in step S54 that the steering angle S is reversed, or if it is not determined in step S55 that the steering angle S is smaller than the third steering angle reference value St3 on the reverse side, the threshold T remains unchanged, and the process proceeds to step S14.

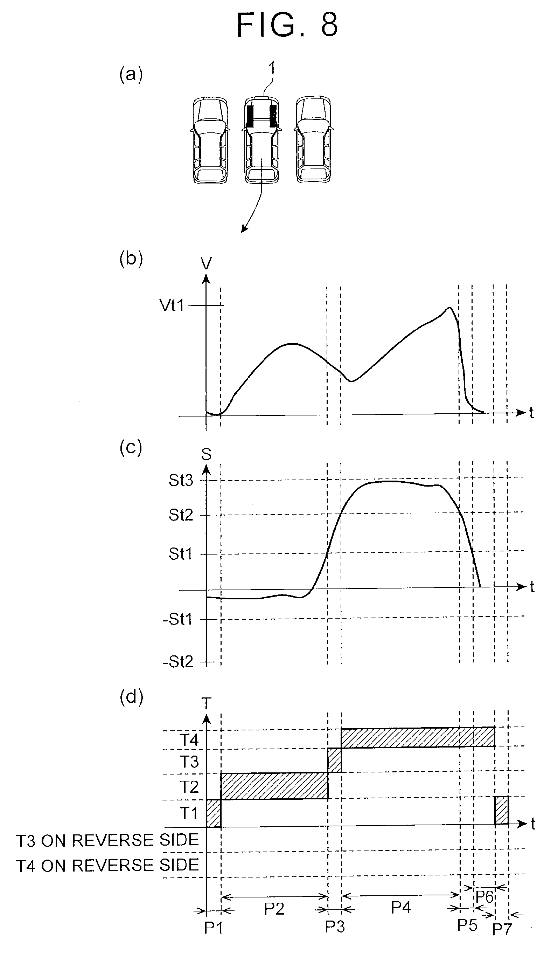

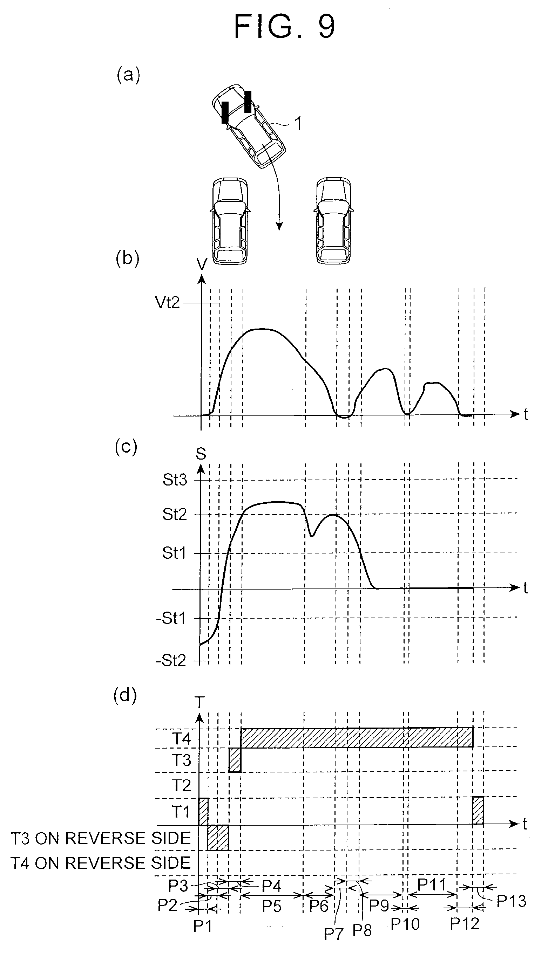

Next, examples of changing the detection threshold T will be described with reference to FIGS. 8 and 9. FIG. 8 is a view showing a situation of changing the detection threshold T during a backward exit from a shed. In the example shown in FIG. 8, the mobility information (the speed V (FIG. 8 (b)) and the steering angle S (FIG. 8 (c))) indicating the behavior (FIG. 8 (a)) of the host vehicle 1 during the backward exit from the shed is classified into seven stages P1 to P7. In the first stage P1, the steering wheel is slightly turned to the left in an almost stopped state. In the second stage P2, the host vehicle 1 moves backward by a large distance with the steering wheel turned to the left, and the host vehicle 1 slightly moves backward while the steering wheel is further turned to the right. In the third stage P3, the steering wheel is turned to the right by a rather large angle. In the fourth stage P4, the host vehicle 1 moves backward by a large distance with the steering wheel further turned to the right by a large angle. In the fifth stage P5, the host vehicle 1 is gradually stopped while the steering wheel is returned to its straight position. In the sixth stage P6, the steering wheel has been returned to its straight position, and the host vehicle 1 remains stopped for a predetermined time.

In accordance with such a behavior of the host vehicle 1, as shown in FIG. 8 (d), the detection threshold T is set to the first threshold T1 in the first stage P1, and is changed to the second threshold T2 in the second stage P2, to the third threshold T3 in the third stage P3, and to the fourth threshold T4 in the fourth stage P4. From the first stage P1 to the fourth stage P4, the detection threshold T gradually increases, or the detection sensitivity gradually decreases. Then, the detection threshold T is usually changed to the third threshold T3 in the fifth stage P5, and to the first threshold T1 in the sixth stage P6, based on the mobility information.

However, from the fifth stage P5 to the sixth stage P6, the detection threshold T gradually decreases, or the detection sensitivity gradually increases. Thus, the detection threshold T, which is held equal to the fourth threshold T4 in the fifth stage P5 and the sixth stage P6, is changed to the first threshold T1 in the seventh stage P7, namely, as soon as the host vehicle 1 is completely stopped. Thus, the occurrence of an absence of detection in changing the detection threshold can be suppressed, and the occurrence of an erroneous detection by knocking resulting from the braking before a stop can be suppressed.

FIG. 9 is a view showing a situation of changing the detection threshold T during a backward entrance into the shed. In the example shown in FIG. 9, the mobility information (the speed V (FIG. 9 (b)) and the steering angle S (FIG. 9 (c))) indicating the behavior (FIG. 9 (a)) of the host vehicle 1 during the backward entrance into the shed is classified into thirteen stages P1 to P13. In the first stage P1, the steering wheel is turned to the right by a rather large angle in an almost stopped state. In the second stage P2, the host vehicle 1 slightly moves backward with the steering wheel turned to the right. In the third stage P3, the host vehicle 1 continues to move backward while the steering wheel is turned from the right to the left. In the fourth stage P4, the host vehicle 1 slightly moves backward with the steering wheel turned to the left by a certain angle. In the fifth stage P5, the host vehicle 1 moves backward by a large distance with the steering wheel turned to the left by a large angle. In the sixth stage P6, the host vehicle 1 slowly moves backward while the steering wheel is returned by a small angle.

Subsequently, in the seventh stage P7, the host vehicle 1 is almost stopped with the steering wheel held as it is, with a view to confirming the distance from an obstacle or the like. In the eighth stage P8, the host vehicle 1 slightly moves backward while the steering wheel is returned. In the ninth stage P9, the host vehicle 1 moves backward by a large distance while the steering wheel is returned to its straight position. In the tenth stage P10, the host vehicle 1 is almost stopped with the steering wheel held as it is, for the sake of reconfirmation. In the eleventh stage P11, the host vehicle 1 moves backward by a large distance with the steering wheel returned to its straight position. In the twelfth stage P12, the host vehicle 1 remains stopped for a predetermined time.

In accordance with such a behavior of the host vehicle 1, as shown in FIG. 9 (d), the detection threshold T is set to the first threshold T1 in the first stage P1, and is changed to the third threshold T3 in the second stage P2. Subsequently, the detection threshold T is usually changed to the second threshold T2 in the third stage P3, based on the mobility information. Subsequently, the detection threshold T is changed to the third threshold T3 on the reverse side in the fourth stage P4, and to the fourth threshold T4 on the reverse side in the fifth stage P5. Subsequently, the detection threshold T is usually changed to the third threshold T3 on the reverse side in the sixth stage P6, to the first threshold T1 in the seventh stage P7, to the third threshold T3 on the reverse side in the eighth stage P8, to the second threshold T2 in the ninth stage P9, to the first threshold T1 in the tenth stage P10, to the second threshold T2 in the eleventh stage P11, and to the first threshold T1 in the twelfth stage P12, based on the mobility information.

However, from the third stage P3 to the fourth stage P4, the detection threshold T decreases, or the detection sensitivity increases. Thus, as shown in FIG. 9(d), the detection threshold T is changed to the third threshold T3 on the reverse side as soon as the steering angle S becomes smaller than the first steering angle reference value St1. Besides, from the sixth stage P6 to the twelfth stage P12, the detection threshold T decreases, or the detection sensitivity increases. Thus, as shown in FIG. 9 (d), the detection threshold T, which is held equal to the fourth threshold T4 from the sixth stage P6 to the twelfth stage P12, is changed to the first threshold T1 in the thirteenth stage P13, namely, as soon as the host vehicle 1 is completely stopped. Thus, the occurrence of an absence of detection in changing the detection threshold can be suppressed, and the occurrence of an erroneous detection by knocking resulting from the braking before a stop can be suppressed.

As described above, in accordance with the object detection device according to the first embodiment of the invention, the detection threshold T in detecting the moving object is changed based on the mobility information on the vehicle. Thus, by changing the detection threshold T such that the moving object becomes difficult to detect during a movement of the host vehicle 1, especially during a turn thereof, the occurrence of an erroneous detection can be suppressed even in a situation where an erroneous detection is likely to occur.

Besides, by changing the detection threshold T such that the moving object becomes difficult to detect as the speed V increases, the occurrence of an erroneous detection can be suppressed during a movement of the host vehicle 1.

Besides, by changing the detection threshold T such that the moving object becomes difficult to detect as the steering angle S increases, the occurrence of an erroneous detection can be suppressed during a turn of the host vehicle 1.

Besides, by changing the detection threshold T such that the moving object becomes difficult to detect as the angular velocity W of the steering angle S increases, the occurrence of an erroneous detection can be suppressed during a high-speed turn of the host vehicle 1.

Besides, by changing the detection threshold T such that the moving object becomes easy to detect only if the setting condition on the speed V or the steering angle S is fulfilled, the occurrence of an unnecessary change in the detection threshold T can be suppressed.

Besides, by directly changing the detection threshold T from a first value to a second value if a condition for changing the detection threshold T in stages from the first value to the second value is fulfilled, the occurrence of an absence of detection in changing the detection threshold T can be suppressed.

Besides, by refraining from changing the detection threshold T until the host vehicle 1 is completely stopped if a condition for changing the detection threshold T to a threshold at which the moving object is easiest to detect is fulfilled, the occurrence of an erroneous detection by knocking resulting from the braking before a stop can be suppressed.

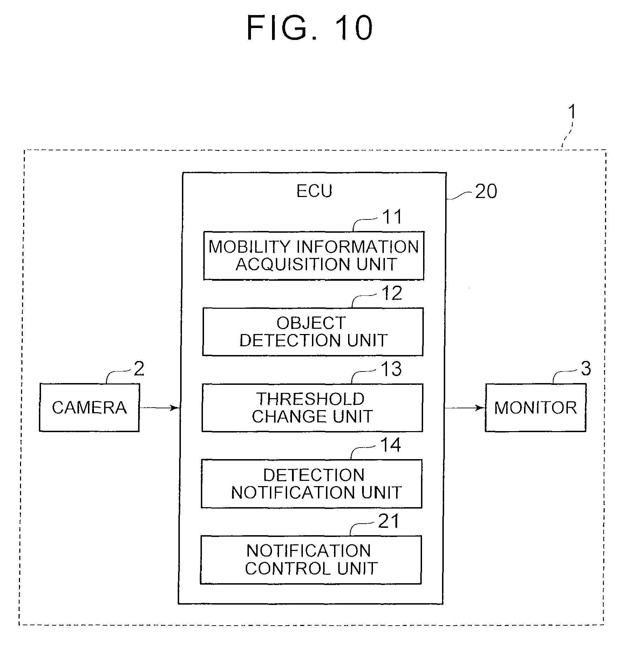

Next, a vehicle periphery monitoring apparatus that includes an object detection device according to the second embodiment of the invention will be described with reference to FIGS. 10 to 14. The object detection device according to the second embodiment of the invention is a device capable of suppressing the occurrence of an erroneous notification resulting from an erroneous detection during a movement of a host vehicle by changing the execution state of a notification of a detection result based on mobility information on the vehicle. Incidentally, the same description as in the first embodiment of the invention will be omitted hereinafter.

First of all, the configuration of the vehicle periphery monitoring apparatus according to the second embodiment of the invention will be described with reference to FIG. 10. FIG. 10 is a block diagram showing the configuration of the vehicle periphery monitoring apparatus that includes the object detection device according to the second embodiment of the invention.

As shown in FIG. 10, the vehicle periphery monitoring apparatus according to the second embodiment of the invention also has the camera 2, an ECU 20, and the monitor 3. In addition to the mobility information acquisition unit 11, the object detection unit 12, the threshold change unit 13, and the detection notification unit 14, the ECU 20 has a notification control unit 21. These component elements 11 to 14 and 21 constitute the object detection device according to the second embodiment of the invention.

The notification control unit 21 changes the execution state of a notification of a detection result by the detection notification unit 14. The notification control unit 21 stops the notification of the detection result if the speed V is higher than a notification reference value Vt2. Besides, the notification control unit 21 does not resume the notification of the detection result until the speed V remains equal to 0 km/h for a set time, namely, until the host vehicle 1 is completely stopped, once the notification of the detection result is stopped. Incidentally, the notification control unit 21 may change the execution state of the notification of the detection result in consideration of a condition on acceleration as well as the speed V.

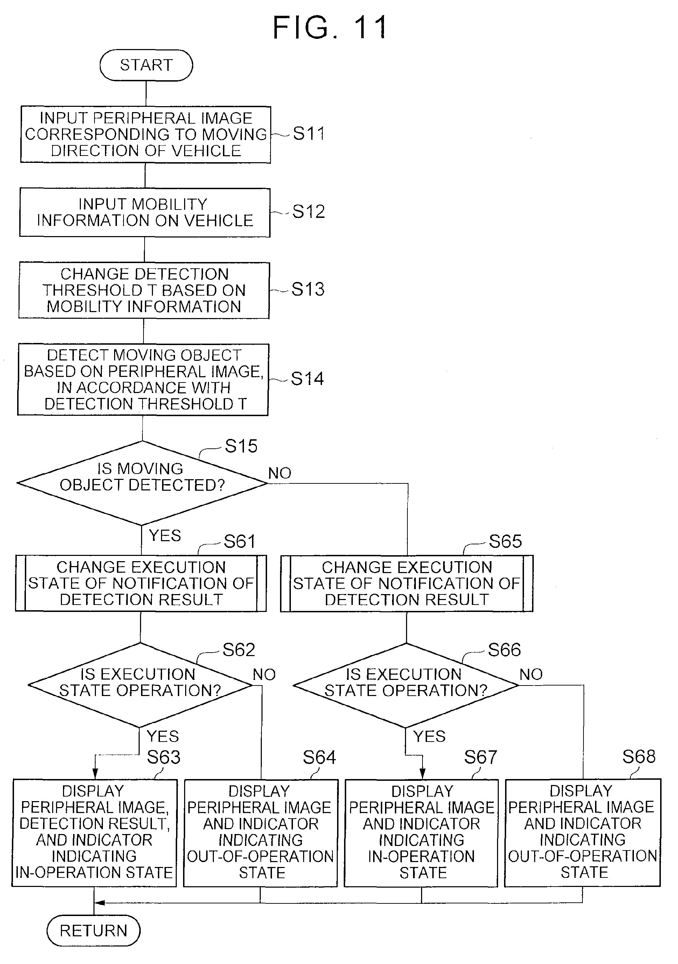

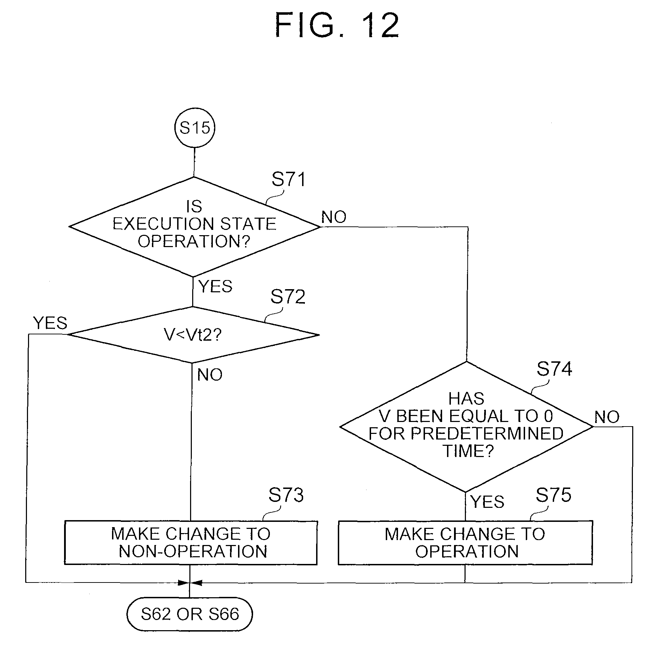

Next, the operation of the vehicle periphery monitoring apparatus according to the second embodiment of the invention will be described with reference to FIGS. 11 to 14. FIG. 11 is a flowchart showing the operation of the vehicle periphery monitoring apparatus according to the second embodiment of the invention. The vehicle periphery monitoring apparatus repeatedly performs a process shown in FIG. 11 (including a process shown in FIG. 12) on a predetermined cycle. Incidentally, the description of steps S11 to S 15 is the same as in FIG. 3, and therefore will be omitted.

As shown in FIG. 11, if it is determined in step S 15 whether or not the moving object is detected, the notification control unit 21 changes the execution state of the notification of the detection result based on the mobility information, as will be described later with reference to FIG. 12 (step S61 and step S65).

If it is determined in step S15 that the moving object is detected, and if it is determined in step S62 that the execution state is set to "operation (execution)", a peripheral image, the detection result, and an indicator indicating an in-operation state are displayed (step S63). On the other hand, if it is determined in step S62 that the execution state is set to "non-operation (stop)", the peripheral image and an indicator indicating an out-of-operation state are displayed (step S64).

If it is not determined in step S15 that the moving object is detected, and if it is determined in step S66 that the execution state is set to "operation (execution)", the peripheral image and the indicator indicating the in-operation state are displayed (step S67). On the other hand, if it is determined in step S66 that the execution state is set to "non-operation (stop)", the peripheral image and the indicator indicating the out-of-operation state are displayed (step S68).

FIG. 12 is a view showing a process of changing the execution state of a notification of the detection result (steps S61 and S65). The notification control unit 21 makes a determination on the execution state at the present time, and changes the execution state according to need, based on a result of the determination.

As shown in FIG. 12, if it is determined in step S71 that the execution state is set to "operation" at the present time, the notification control unit 21 determines whether or not the speed V is lower than the notification reference value Vt2 (step S72). Then, if it is determined that the speed V is lower than the notification reference value Vt2, the process proceeds to step S62 or S66. If it is not determined that the speed V is lower than the notification reference value Vt2, the notification control unit 21 changes the execution state to "non-operation" (step S73).

On the other hand, if it is determined in step S71 that the execution state is set to "non-operation" at the present time, the notification control unit 21 determines whether or not the speed V has been 0 for a predetermined time, namely, whether or not the host vehicle 1 is completely stopped (step S74). Then, if it is determined that the speed V has been 0 for the predetermined time, the notification control unit 21 changes the execution state to "operation" (step S75). On the other hand, if it is not determined that the speed V has been 0 for the predetermined time, the process proceeds to step S62 or S66.

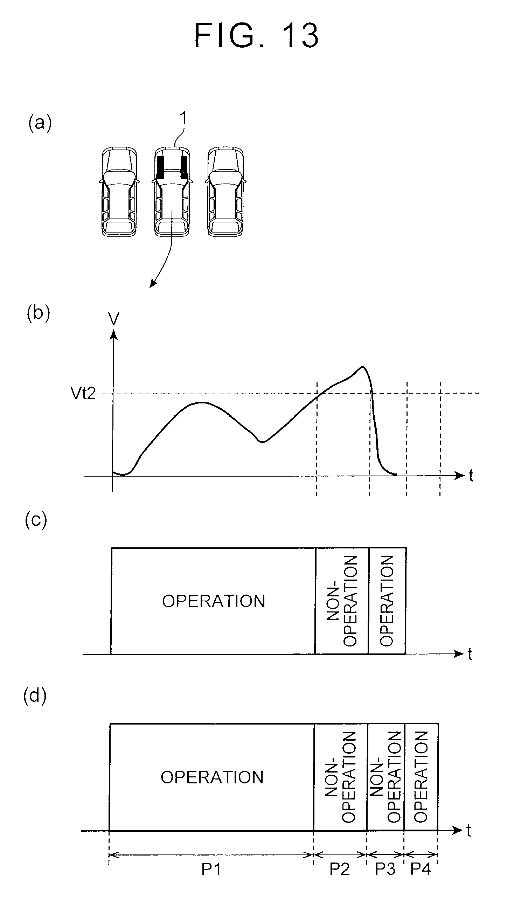

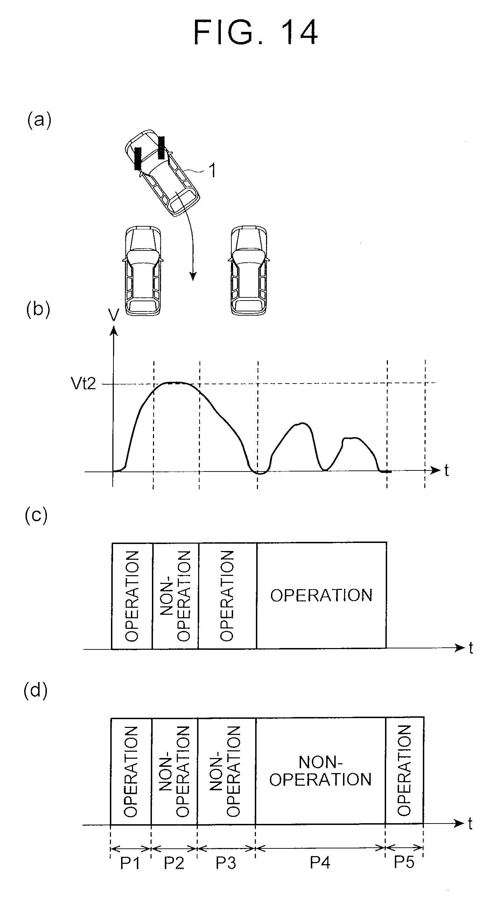

Next, examples of changing the execution state will be described with reference to FIGS. 13 and 14. FIG. 13 shows a situation of changing the execution state during a backward exit from the shed. In the example shown in FIG. 13, the mobility information (the speed V (FIG. 13 (b))) indicating changes in the behavior of the host vehicle 1 (FIG. 13 (a)) is shown. Incidentally, the description of the behavior of the host vehicle 1 is the same as in FIG. 8, and therefore will be omitted.

As shown in FIG. 13 (c), in the first stage P1, a backward exit from the shed is started, and the execution state of a notification of the detection result is held as "operation" to execute the notification of the detection result, while the host vehicle 1 moves at the speed V lower than the notification reference value Vt2. In the second stage P2, the speed V becomes higher than the notification reference value Vt2, and an erroneous detection becomes likely to occur, so the execution state is changed to "non-operation" to stop the notification of the detection result. Thus, the occurrence of an erroneous notification resulting from an erroneous detection during the movement is suppressed. In the third stage P3, the speed V returns to a speed lower than the notification reference value Vt2 immediately before the end of the backward exit from the shed, the execution state is changed to "operation", and the notification of the detection result is resumed.

However, if the execution state is thus changed, a notification of an unnecessary detection result is given immediately before the end of the backward exit from the shed, and an erroneous notification may occur as an adverse effect. Besides, immediately before the end of the backward exit from the shed, the host vehicle 1 subtly moves due to knocking resulting from sudden braking, and an erroneous detection and an erroneous notification may occur. Thus, as shown in FIG. 13 (d), once the execution state is changed to "non-operation" in the second stage P2, it is preferable to refrain from changing the execution state to "operation" until the speed V has been 0 for a set time in the third stage P3.

If the execution state is thus changed, the backward exit from the shed is started. If the speed V becomes higher than the notification reference value Vt2 and the execution state is changed to "non-operation", there is no possibility of the execution state being changed to "operation" until the speed V has been 0 for a while after the end of the backward exit from the shed, even in the case where the speed V has returned to a speed lower than the notification reference value Vt2. Besides, by notifying the driver of the execution state of the notification of the detection result, the driver is allowed to recognize that he or she is notified of the detection result only in starting to move the vehicle.

FIG. 14 shows a situation of changing the execution state during a backward entrance into the shed. In the example shown in FIG. 14 as well, the mobility information (the speed V (FIG. 14 (b))) indicating changes (FIG. 14 (a)) in the behavior of the host vehicle 1 (the speed V) is shown. Incidentally, the description of the behavior of the host vehicle 1 is the same as in FIG. 9, and therefore will be omitted.

As shown in FIG. 14 (c), in the first stage P1, a backward entrance into the shed is started, and the execution state of the notification of the detection result is held as "operation" while the host vehicle 1 moves at the speed V lower than the notification reference value Vt2. In the second stage P2, the speed V becomes higher than the notification reference value Vt2, and the execution state is changed to "non-operation". Then, with a view to confirming an obstacle or the like in the course of the backward entrance into the shed, the speed V returns to a speed lower than the notification reference value Vt2, and hence the execution state is changed to "operation", in the third stage P3 and the fourth stage P4 where a slight movement and a stop are repeated.

However, if the execution state is thus changed, a notification of an unnecessary detection result is given in the course of the backward entrance into the shed, and an erroneous notification may occur as an adverse effect. Besides, immediately before the end of the backward entrance into the shed, the host vehicle 1 makes subtle movements due to knocking resulting from sudden braking, and an erroneous detection and an erroneous notification may occur. Thus, as shown in FIG. 14 (d), once the execution state is changed to "non-operation" in the second stage P2, it is preferable to refrain from changing the execution state to "operation" until the speed V has been 0 for a set time in the fourth stage P4.

If the execution state is thus changed, the backward entrance into the shed is started. If the speed V becomes higher than the notification reference value Vt2 and the execution state is changed to "non-operation", there is no possibility of the execution state being changed to "operation" until the speed V has been 0 for a while after the end of the backward entrance into the shed, even in the case where a slight movement and a stop are repeated, with a view to confirming an obstacle or the like.

As described above, in accordance with the object detection device according to the second embodiment of the invention, if the speed V is higher than the notification reference value Vt2, the occurrence of an erroneous notification resulting from an erroneous detection during the movement of the host vehicle 1 can be suppressed by stopping the notification of the detection result.

Besides, if the notification of the detection result is stopped, the occurrence of an unnecessary notification can be suppressed by refraining from resuming the notification of the detection result until the host vehicle 1 has been completely stopped for the set time.

Besides, by notifying the driver of the execution state of the notification of the detection result, the driver can confirm the execution state of the notification and avoid an erroneous operation.

Incidentally, the foregoing embodiments of the invention have been described as the best embodiments of the object detection device according to the invention. The object detection device according to the invention should not be limited to those described in the present embodiments of the invention. The object detection device according to the invention may be obtained by modifying or applying otherwise the object detection device according to each of the present embodiments of the invention, without departing from the gist of the invention set forth in the respective claims.

Besides, the invention is also applicable in the same manner to a program for suppressing the occurrence of an erroneous detection of a moving object during a movement or suppressing the occurrence of an erroneous notification resulting from this erroneous detection according to the foregoing method, and to a computer-readable recording medium in which the program is stored.

For example, in the aforementioned embodiments of the invention, the case where the moving object is detected based on the peripheral image of the vehicle 1 has been described. However, the moving object may be detected based on a detection result of a millimeter-wave sensor, a laser sensor or the like. Besides, in the aforementioned embodiments of the invention, the case where the four thresholds T1 to T4 are set as the detection threshold T has been described. However, three or less thresholds T or five or more thresholds T may be set. Besides, in the aforementioned embodiments of the invention, the case where the thresholds T3 and T4 are set as the same value regardless of whether a right turn or a left turn is made has been described. However, the thresholds T3 and T4 may be set as different values, in consideration of the situation of visual recognition by the driver or the like.

### DESCRIPTION OF REFERENCE NUMERALS

- 1: VEHICLE
- 2: CAMERA
- 3: MONITOR
- 10, 20: ECU
- 11: MOBILITY INFORMATION ACQUISITION UNIT
- 12: OBJECT DETECTION UNIT
- 13: THRESHOLD CHANGE UNIT
- 14: DETECTION NOTIFICATION UNIT
- 21: NOTIFICATION CONTROL UNIT

## Claims

1. An object detection device comprising:
an object detection unit that detects a moving object in a periphery of a vehicle; and
a threshold change unit that changes, based on mobility information on the vehicle, a detection threshold in detecting the moving object.

2. The object detection device according to claim 1, wherein
the threshold change unit changes the detection threshold such that the moving object becomes difficult to detect as a speed of the vehicle increases.

3. The object detection device according to claim 1 or 2, wherein
the threshold change unit changes the detection threshold such that the moving object becomes difficult to detect as a steering angle of the vehicle increases.

4. The object detection device according to any one of claims 1 to 3, wherein
the threshold change unit changes the detection threshold such that the moving object becomes difficult to detect as an angular velocity of the steering angle of the vehicle increases.

5. The object detection device according to any one of claims 1 to 4, wherein
the threshold change unit changes the detection threshold in stages based on a comparison between the mobility information and a reference value on the mobility information.

6. The object detection device according to any one of claims 1 to 5, wherein
the threshold change unit changes the detection threshold such that the moving object becomes easy to detect only when a setting condition on the speed or the steering angle is fulfilled.

7. The object detection device according to claim 6, wherein
the threshold change unit directly changes the detection threshold from a first value to a second value when a condition for changing the detection threshold in stages from the first value to the second value is fulfilled.

8. The object detection device according to claim 6 or 7, wherein
the threshold change unit does not change the detection threshold until the vehicle is completely stopped, when a condition for changing the detection threshold to a threshold at which the moving object is easiest to detect is fulfilled.

9. The object detection device according to any one of claims 1 to 8, further comprising:
a detection notification unit that gives a notification of a detection result of the moving object; and
a notification control unit that stops the notification of the detection result when the speed is higher than a notification reference value.

10. The object detection device according to claim 9, wherein
the notification control unit does not resume the notification of the detection result until the vehicle has been completely stopped for a set time, once the notification of the detection result is stopped.

11. The object detection device according to claim 9 or 10, wherein
the detection notification unit further gives a notification of an execution state of the notification of the detection result.

12. The object detection device according to any one of claims 1 to 11, wherein
the object detection unit detects the moving object based on a peripheral image that is input from an image pickup device that picks up a peripheral image of the vehicle.
